# EUROPÄISCHE PATENTSCHRIFT

(11) **EP 0 504 785 B1**
(45) Veröffentlichungstag und Bekanntmachung des Hinweises auf die Patenterteilung: **08.11.1995**
(21) Anmeldenummer: 92104546.4
(22) Anmeldetag: 17.03.1992
(51) Int. Cl.: B29C 45/67, B29C 45/17

(54) **Schliessvorrichtung für eine Spritzgiessform**
Closing device for an injection mould
Dispositif de fermeture pour un moule d'injection

(30) Priorität: 18.03.1991 DE 4108749
(43) Veröffentlichungstag der Anmeldung: 23.09.1992
(73) Patentinhaber: Hemscheidt Maschinentechnik Schwerin GmbH & Co., 19061 Schwerin (DE)
(72) Erfinder: Dannehl, Friedrich-Wilhelm, W-5800 Hagen 5 (DE); Reinelt, Werner, W-4630 Bochum 1 (DE); Runkel, Walter, Dr. Dipl.-Ing., W-5600 Wuppertal 2 (DE)

(56) Entgegenhaltungen:
- CH-A- 537 803
- DE-A- 3 802 266
- FR-A- 2 171 101
- GB-A- 2 061 808

## Beschreibung

Die vorliegende Erfindung betrifft eine Schließvorrichtung für eine Spritzgießform bestehend aus einem ortsfest angeordneten, ersten Formenteil-Träger, einem relativ zu diesem auf Führungsstangen verschiebbar geführten, zweiten Formenteil-Träger sowie einer mit den Formenteil-Trägern verbundenen, druckmittelbetätigbaren Schließzylinderanordnung mit einem ortsfest abgestützten Zylinder und einem über eine Kolbenstange an dem verschiebbaren Formenteil-Träger gelenkig angreifenden Schließkolben.

Aus der FR-A-2 171 101 ist eine Schließvorrichtung für eine Spritzgießform bekannt, bei der zwei parallel zu den Führungsstangen verlaufende Zylinder mit langem Hub und ein quer zur Bewegungsachse verschiebbarer Zylinder mit kurzem Zylinderhub und hoher Schließkraft in der Weise zusammenwirken, daß der verschiebbar geführte Formenteil-Träger von den Langhub-Zylindern aus der Öffnungsstellung der Form in die Schließstellung und zurück bewegt wird, während die für den Schließvorgang notwendige Schließkraft von dem Kurzhub-Zylinder aufgebracht wird. Die Langhub-Zylinder sind mit den Formenteil-Trägern fest verbunden. Der Kurzhub-Zylinder wird zum Schließen der Form von der Seite her in die Bewegungsachse eingeschoben und mit der ausfahrenden Kolbenstange an einer nach außen gewölbten Kugelkappe am freien Ende eines zylinderseitig auf den Formenteil-Träger aufgesetzten, rohrförmigen Zwischenstücks zur Anlage gebracht. Zum Öffnen der Form wird der Kurzhub-Zylinder zurück in eine Seitenstellung außerhalb der Bewegungsachse verschoben. Diese Schließzylinder-Anordnung ist nicht nur sehr bauaufwendig, sondern benötigt auch einen hohen Zeitaufwand für jeden Arbeitszyklus. Eine gelenkige Verbindung der Schließzylinder-Anordnung mit dem verschiebbar geführten Formenteil-Träger besteht nicht.

Eine gattungsgemäße Schließvorrichtung ist aus dem DE-GM 90 13 791 bekannt. Diese Schließvorrichtung hat sich im wesentlichen gut bewährt; aufgrund ihrer konstruktiven Ausgestaltung ist sie in der Lage, eine äußerst hohe Schließkraft zu erzeugen. Nun sind aber in der Praxis einige Probleme beim Schließen und Öffnen der Form beobachtet worden, und zwar einerseits starke, vermutlich reibungsbedingte Geräusche (Schwingungen) im Bereich der Führungen des beweglichen Formenteil-Trägers. Andererseits wurde in Einzelfällen beobachtet, daß sich während des Schließens der Form die Anordnung der an den Formenteil-Trägern gehalterten Formenteile relativ zueinander änderte, so daß beim Schließen der Form aufgrund der sehr hohen Schließkraft an den Formenteilen angeordnete Paßstifte, die durch Eingreifen in entsprechende Paßlöcher des jeweils anderen Formenteils ein lagerichtiges Zusammenführen der Formenteile gewährleisten sollen, beschädigt wurden, wodurch die Form unbrauchbar wurde und instandgesetzt werden mußte.

Der vorliegenden Erfindung liegt die Aufgabe zugrunde, die bekannte Schließvorrichtung der gattungsgemäßen Art so zu verbessern, daß die angesprochenen Probleme beseitigt werden können, d.h. daß eine verbesserte Funktion bei verlängerter Standzeit gewährleistet ist.

Erfindungsgemäß wird dies dadurch erreicht, daß die Kolbenstange mit dem verschiebbar geführten Formenteil-Träger über ein Gelenk verbunden ist, das aus einem an der Kolbenstange angeordneten Gelenkkopf und einer diesen aufnehmenden Gelenkaufnahme besteht.

Die Erfindung beruht auf der Erkenntnis, daß die genannten Probleme dann auftreten, wenn aufgrund von Herstellungsungenauigkeiten und Toleranzen Unparallelitäten bzw. Fluchtungsfehler zwischen den Bewegungsachsen der Schließzylinderanordnung einerseits und des beweglichen Formenteil-Trägers andererseits vorhanden sind. Aufgrund der speziellen Konstruktion der Schließzylinderanordnung, bei der der Schließkolben mit zwei axial in entgegengesetzten Richtungen aus dem Zylinder geführten Kolbenstangen verbunden ist, die jeweils über gesonderte Führungsringe geführt sind, ist der Schließkolben wesentlich "straffer" geführt, als der mit diesem über eine der Kolbenstangen starr verbundene, als Trägerplatte ausgebildete Formenteil-Träger, so daß folglich die Kolbenführung gegenüber der Führung des Formenteil-Trägers "dominiert". Dies hat zur Folge, daß bei Unparallelitäten der Bewegungsachsen der Formenteil-Träger von der Schließzylinderanordnung zwangsweise in deren Bewegungsachse gebracht wird, was zu den oben geschilderten Problemen führt. Dies wirkt sich zudem auch in einem starken Verschleiß im Bereich der Führungen des Formenteil-Trägers aus.

Erfindungsgemäß erfolgt nun über die gelenkige, schwenkbewegliche Verbindung zwischen der Schließzylinderanordnung und dem beweglichen Formenteil-Träger eine "Entkoppelung" der Führungen der Schließzylinderanordnung einerseits und des Formenteil-Trägers andererseits, so daß ein selbsttätiger Ausgleich von Fluchtungsfehlern bzw. Unparallelitäten zwischen den Bewegungsachsen erfolgen kann. Dies bedeutet, daß aufgrund der Erfindung eine gegenseitige Beeinflussung der Führungen der Schließzylinderanordnung bzw. des Schließkolbens einerseits und des Formenteil-Trägers andererseits ausgeschlossen ist. Dabei ist es dann erfindungsgemäß zweckmäßig, den verschiebbaren Formenteil-Träger für sich kippfrei zu führen. Vorzugsweise wird hierzu der verschiebbare Formenteil-Träger aus zwei parallelen, quer, insbesondere senkrecht zur Bewegungsachse angeordneten und starr miteinander verbundenen Trägerplatten gebildet, die jeweils miteinander fluchtende Führungsöffnungen aufweisen, mit denen sie auf parallelen Führungsstangen geführt sind. Durch diese erfindungsgemäße Ausgestaltung liegen die Führungen bzw. Führungsöffnungen in Richtung der Bewegungsachse relativ weit auseinander, so daß gegenüber dem eingangs beschriebenen Stand der Technik eine verbesserte, kippfreie Führung des beweglichen Formenteil-Trägers erreicht wird.

Weitere vorteilhafte Ausgestaltungsmerkmale der Erfindung sind in den Unteransprüchen sowie der folgenden Beschreibung enthalten.

Anhand eines in der Zeichnung dargestellten, bevorzugten Ausführungsbeispiels soll im folgenden die Erfindung näher erläutert werden. Dabei zeigen:
- Fig. 1: eine teilweise geschnittene Seitenansicht einer erfindungsgemäßen Schließvorrichtung und
- Fig. 2: eine vergrößerte Ansicht der in Fig. 1 mit II bezeichneten Einzelheit.

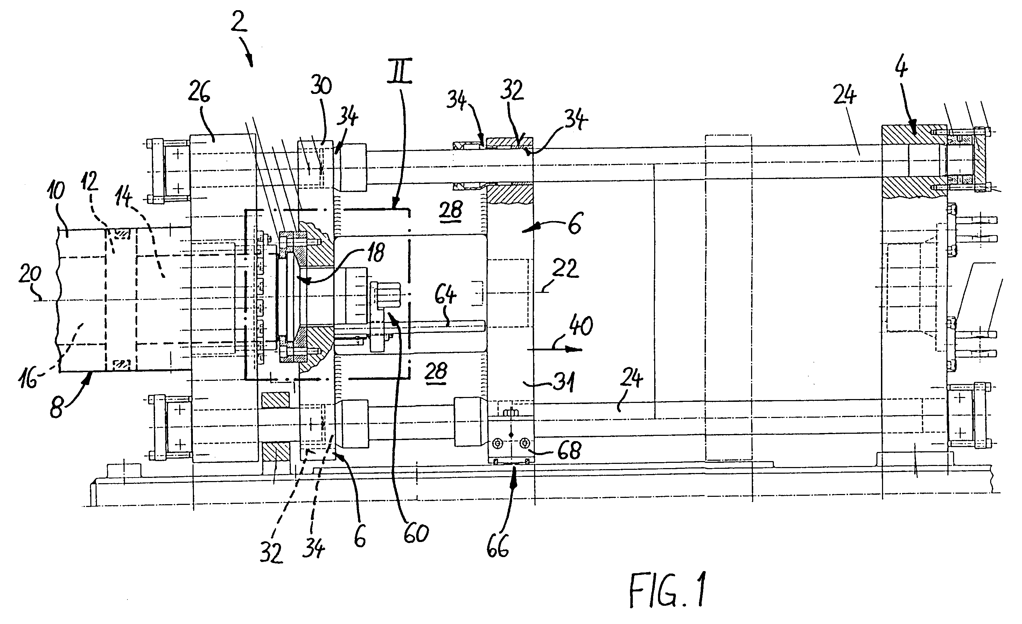

Gemäß Fig. 1 besteht eine erfindungsgemäße Schließvorrichtung 2 aus einem ortsfest angeordneten, ersten Formenteil-Träger 4, einem relativ zu diesem verschiebbar geführten, zweiten Formenteil-Träger 6 sowie mindestens einer mit den Formenteil-Trägern 4, 6 verbundenen, druckmittelbetätigbaren, insbesondere hydraulischen Schließzylinderanordnung 8. An den Formenteil-Trägern 4 und 6 sind nicht dargestellte Formenteile bzw. Formenhälften einer Spritzgießform in lagerichtiger Zuordnung zueinander befestigbar. Die Schließzylinderanordnung 8 besteht aus einem Zylinder 10 und einem in diesem beweglich geführten, druckmittelbeaufschlagten Schließkolben 12, der mit einer abgedichtet aus dem Zylinder 10 nach außen geführten Kolbenstange 14 verbunden ist. Der Schließkolben 12 und die Kolbenstange 14 sind in Fig. 1 lediglich gestrichelt angedeutet. Dabei kann der Schließkolben 12 zusätzlich mit einer zweiten, der ersten Kolbenstange 14 gegenüberliegenden Kolbenstange 16 verbunden sein. Dabei sind beide Kolbenstangen 14, 16 über nicht dargestellte Führungen in dem Zylinder 10 geführt, was eine sehr "straffe" Führung zur Folge hat, so daß der Schließkolben 12 in Verbindung mit den Kolbenstangen 14, 16 aufgrund der in axialer Richtung weit voneinander beabstandeten Führungen sehr hohe Querkräfte aufnehmen kann.

In der dargestellten, bevorzugten Ausführungsform der Erfindung ist der Zylinder 10 ortsfest abgestützt und damit mittelbar mit dem ersten, ortsfesten Formenteil-Träger 4 verbunden, während der zweite, beweglich geführte Formenteil-Träger 6 über die Kolbenstange 14 mit dem Schließkolben 12 verbunden ist. Eine kinematische Umkehr dieser bevorzugten Ausführung liegt jedoch grundsätzlich ebenfalls im Rahmen der Erfindung.

Erfindungsgemäß ist nun die Schließzylinderanordnung 8 mit dem verschiebbar geführten, zweiten Formenteil-Träger 6 gelenkig verbunden. Hierzu ist im bevorzugten Ausführungsbeispiel die Kolbenstange 14 über ein Gelenk 18 mit dem verschiebbar geführten Formenteil-Träger 6 verbunden. Durch dieses Gelenk 18 wird vorteilhafterweise erreicht, daß die Bewegungsachse 20 der Schließzylinderanordnung 8 einerseits und die Bewegungsachse 22 des verschiebbaren Formenteil-Trägers 6 andererseits durchaus unparallel, d.h. in einem spitzen Winkel zueinander angeordnet sein können, ohne daß es zu einer Beeinflussung der Führungen der Schließzylinderanordnung 8 und des Formenteil-Trägers 6 kommen könnte.

Wie sich weiterhin aus Fig. 1 ergibt, ist der verschiebbare Formenteil-Träger 6 im wesentlichen kippfrei auf vorzugsweise vier zueinander sowie zur Bewegungsachse 22 parallelen Führungsstangen 24 geführt. Diese Führungsstangen 24 verbinden zweckmäßigerweise auch den ortsfesten Formenteil-Träger 4 mit einem Zylinderdeckel 26 der Schließzylinderanordnung 8. Im bevorzugten Ausführungsbeispiel besteht der verschiebbare Formenteil-Träger 6 aus zwei zueinander parallelen, sich insbesondere senkrecht zur Bewegungsachse 22 erstreckenden und starr, vorzugsweise unlösbar über eingeschweißte Verbinderstücke 28 miteinander verbundenen Trägerplatten 30 und 31. Diese Trägerplatten 30, 31 weisen jeweils miteinander fluchtende Führungsöffnungen 32 für die Führungsstangen 24 auf. In den Führungsöffnungen 32 sitzen geeignete, buchsenartige Führungseinsätze 34, die sich bereichsweise auch über die Trägerplatten 30, 31 hinaus erstrecken können. Diese erfindungsgemäße Ausgestaltung gewährleistet eine sehr gute, kippfreie und dabei zudem auch reibungsarme Führung des Formenteil-Trägers 6.

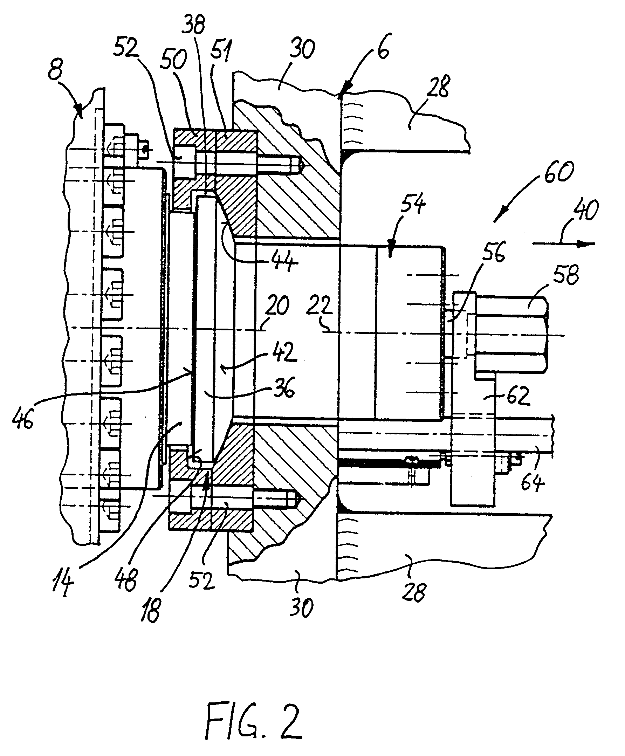

Wie nun am besten in Fig. 2 erkennbar ist, besteht das erfindungsgemäß zwischen der Kolbenstange 14 und dem Formenteil-Träger 6 angeordnete Gelenk 18 vorzugsweise aus einem an der Kolbenstange 14 angeordneten bzw. gebildeten (angeformten) Gelenkkopf 36 und einer diesen aufnehmenden, mit dem Formenteil-Träger 6 verbundenen Gelenkaufnahme 38. Dabei weist der Gelenkkopf 36 zumindest auf seiner in Schließrichtung (Pfeil 40) weisenden, d.h. dem ortsfesten Formenteil-Träger 4 zugekehrten Seite eine kalottenförmige Lagerfläche 42 auf. Die Gelenkaufnahme 38 weist eine entsprechend kugelschalenförmige, gelenkpfannenartige Lagerfläche 44 auf, so daß bei einer Bewegung in Schließrichtung 40 der Gelenkkopf 36 mit der Lagerfläche 42 in der Lagerfläche 44 der Gelenkaufnahme 38 sitzt. Hierdurch können vorteilhafterweise sehr große Schließkräfte über das Gelenk 18 übertragen werden. Der Gelenkkopf 36 besitzt im dargestellten Beispiel auf seiner in axialer Richtung der Lagerfläche 42 abgekehrten Seite eine sich senkrecht zur Bewegungsachse 20 der Schließzylinderanordnung 8 erstreckende Stufenfläche 46, und die Gelenkaufnahme 38 weist eine der kugelschalenförmigen Lagerfläche 44 axial gegenüberliegende, senkrecht zur Bewegungsachse 22 des verschiebaren Formenteil-Trägers 6 angeordnete Stufenfläche 48. Dabei liegen sich die Stufenflächen 46 und 48 mit einem derartigen Spiel, d.h. Abstand, gegenüber, daß - hypothetisch gesprochen - die Schließzylinderanordnung 8 und der verschiebbare Formenteil-Träger 6 relativ zueinander um einen Schwenkwinkel von mindestens ± 5° verschwenkbar sind. Tatsächlich kann eine derartige Verschwenkung jedoch aufgrund der Führungen nicht auftreten, vielmehr führt diese erfindungsgemäße Maßnahme dazu, daß eine Unparallelität zwischen den Bewegungsachsen 20 und 22 bis zu einem Winkel von mindestens ± 5° ausgleichbar ist bzw. vorhanden sein kann, ohne daß dies zu Beeinträchtigungen des Bewegungsablaufs der erfindungsgemäßen Schließvorrichtung 2 führen könnte. Die Bewegungsachsen 20, 22 können sich somit in einem Winkel von mindestens 5° bzw. höchstens 175° (Supplementwinkel) schneiden, wobei dann lediglich das Gelenk 18 eine entsprechende Schwenkstellung einnimmt. Dabei sitzt der Gelenkkopf 36 auch mit einem umfänglichen, radialen Spiel in der Gelenkaufnahme 38. Dieses radiale Spiel sowie auch das axiale Spiel zwischen den Stufenflächen 46, 48 ist in Fig. 2 zur Verdeutlichung etwas übertrieben dargestellt. Tatsächlich bewegt sich dieses Spiel in einer Größenordnung von mehreren Zehntel Millimetern.

In einer nicht dargestellten, alternativen Ausführungsform der Erfindung kann anstelle der Stufenflächen 46, 48 auch auf der den Lagerflächen 42, 44 axial gegenüberliegenden Seite des Gelenks 18 eine Anlage über entsprechende Lagerflächen vorgesehen sein, d.h. der Gelenkkopf 36 kann anstelle der Stufenfläche 46 eine kalottenförmige Lagerfläche aufweisen, die in einer entsprechend kugelschalenförmigen, anstelle der Stufenfläche 48 vorhandenen Lagerfläche der Gelenkaufnahme 38 sitzt. Hierdurch kann auch in Zugrichtung eine hohe Kraft übertragen werden.

Wie sich weiterhin der Fig. 2 entnehmen läßt, ist die Gelenkaufnahme 38 vorzugsweise von zwei lösbar miteinander sowie mit dem Formenteil-Träger 6 verbundenen, parallel aneinanderliegenden, plattenförmigen Lagerteilen 50 und 51 gebildet. Dabei besitzt das eine Lagerteil 50 eine Durchführöffnung für die Kolbenstange 14, die sich über die Stufenfläche 48 in die Gelenkaufnahme 38 erweitert. Das andere Lagerteil 51 besitzt als Vertiefung die kugelschalenförmige Lagerfläche 44. Zweckmäßigerweise besitzen die beiden Lagerteile 50 und 51 miteinander fluchtende Löcher, durch die Befestigungsschrauben 52 geführt und mit der Trägerplatte 30 des Formenteil-Trägers 6 verschraubt sind. Dabei kann auch eine Einrichtung vorgesehen sein, über die der Abstand der Lagerteile 50, 51 zur Spieleinstellung veränderbar ist, was insbesondere für die oben erläuterte Alternative mit "doppelten" Kugel-Lagerflächen (in Druck- und Zugrichtung) vorteilhaft ist.

In einer ebenfalls insbesondere in Fig. 2 erkennbaren, vorteilhaften Weiterbildung der Erfindung besitzt die Kolbenstange 14 einen sich axial über den Gelenkkopf 36 hinaus durch Öffnungen der Gelenkaufnahme 38, d.h. des zweiten Lagerteils 51, sowie der Trägerplatte 30 des Formenteil-Trägers 6 erstreckenden, verlängerten Endabschnitt, der hohl als Auswerfer-Zylinder 54 ausgebildet ist. Dieser Auswerfer-Zylinder 54 enthält einen Kolben, der über eine Kolbenstange 56 mit einem Auswerfer 58 verbunden ist. Hierdurch wird eine Auswerfer-Anordnung 60 gebildet, die mit einem entsprechenden Auswerfer der nicht dargestellten Spritzgießform zusammenwirkt. Der Auswerfer 58 ist über ein Führungsstück 62 auf mindestens einer Führungsstange 64 geführt.

Der Vollständigkeit halber sei noch erwähnt, daß - wie in Fig. 1 erkennbar ist - die erfindungsgemäße Schließvorrichtung 2 eine die Stellung des beweglichen Formenteil-Trägers 6 erfassende Wegmeßeinrichtung 66 aufweist. Hierzu ist der bewegliche Formenteil-Träger 6 mit einem Weggeber 68 verbunden, der Steuersignale zur hydraulischen Ansteuerung der Schließvorrichtung 2 erzeugt.

Die Erfindung ist nicht auf das dargestellte und beschriebene Ausführungsbeispiel beschränkt, sondern umfaßt auch alle von den Ansprüchen gedeckten Ausführungen.

## Patentansprüche

1. Schließvorrichtung für eine Spritzgießform bestehend aus einem ortsfest angeordnetem, ersten Formenteil-Träger (4), einem relativ zu diesem auf Führungsstangen (24) verschiebbar geführten, zweiten Formenteil-Träger (6) sowie einer mit den Formenteil-Trägern (4, 6) verbundenen, druckmittelbetätigbaren Schließzylinderanordnung (8) mit einem hinter dem zweiten Formenteil-Träger (6) ortsfest angeordneten Zylinder (10) und einem über eine Kolbenstange (14) an dem verschiebbaren Formenteil-Träger (6) angreifenden Schließkolben (12), **dadurch gekennzeichnet**, daß die Kolbenstange (14) mit dem verschiebbar geführten Formenteil-Träger (6) über ein schwenkbewegliches Gelenk (18) verbunden ist, das aus einem an der Kolbenstange (14) angeordneten Gelenkkopf (36) und einer diesen aufnehmenden Gelenkaufnahme (38) besteht.

2. Schließvorrichtung nach Anspruch 1, dadurch gekennzeichnet, daß der Gelenkkopf (36) mit einer kalottenförmigen Lagerfläche (42) in einer entsprechend kugelschalenförmigen Lagerfläche (44) der Gelenkaufnahme (38) sitzt.

3. Schließvorrichtung nach Anspruch 2,
**dadurch gekennzeichnet,** daß der Gelenkkopf (36) auf seiner in axialer Richtung der Lagerfläche (42) abgekehrten Seite eine sich quer, insbesondere senkrecht zur Bewegungsachse (20) der Schließzylinderanordnung (8) erstreckende Stufenfläche (46) aufweist, die einer sich quer, insbesondere senkrecht zur Bewegungsachse (22) des verschiebbaren Formenteil-Trägers (6) erstreckenden Stufenfläche (48) der Gelenkaufnahme (38) mit derartigem Axialspiel gegenüberliegt, daß eine Unparallelität zwischen den Bewegungsachsen (20, 22) bis zu einem Winkel von mindestens ± 5° ausgleichbar ist.

4. Schließvorrichtung nach Anspruch 2 oder 3,
**dadurch gekennzeichnet,** daß die Gelenkaufnahme (38) von zwei lösbar miteinander und mit dem Formenteil-Träger (6) verbundenen, parallel aneinanderliegenden, plattenförmigen Lagerteilen (50, 51) gebildet ist.

5. Schließvorrichtung nach einem oder mehreren der Ansprüche 1 bis 4,
**dadurch gekennzeichnet,** daß der zweite, verschiebbare Formenteil-Träger (6) im wesentlichen kippfrei auf vorzugsweise vier zueinander und zur Bewegungsachse (22) parallelen Führungsstangen (24) geführt ist.

6. Schließvorrichtung nach Anspruch 5,
**dadurch gekennzeichnet,** daß der verschiebbare Formenteil-Träger (6) aus zwei parallelen, quer, insbesondere senkrecht zur Bewegungsachse (22) angeordneten und starr, insbesondere unlösbar miteinander verbundenen Tragerplatten (30, 31) besteht, die jeweils miteinander fluchtende Führungsöffnungen (32) für die Führungsstangen (24) aufweisen.

7. Schließvorrichtung nach einem oder mehreren der Ansprüche 2 bis 6,
**dadurch gekennzeichnet,** daß die Kolbenstange (14) in ihrem dem Schließkolben (12) abgekehrten Endbereich als Auswerfer-Zylinder (54) einer sich axial durch Öffnungen des Gelenks (18) und des verschiebbaren Formenteil-Trägers (6) erstreckenden, druckmittelbetätigbaren Auswerfer-Anordnung (60) ausgebildet ist.

## Claims

1. A closing apparatus for an injection moulding mould, comprising a first stationarily arranged mould portion carrier (4), a second mould portion carrier (6) which is guided displaceably relative to the first mould portion carrier on guide bars (24), and a pressure medium-actuable closing cylinder arrangement (8) which is connected to the mould portion carriers (4, 6) and which has a cylinder (10) arranged stationarily behind the second mould portion carrier (6) and a closing piston (12) which engages the displaceable mould portion carrier (6) by way of a piston rod (14), characterised in that the piston rod (14) is connected to the displaceably guided mould portion carrier (6) by way of a pivotally movable joint (18) comprising a joint head (36) arranged on the piston rod (14) and a joint receiving means (38) for receiving the joint head.

2. A closing apparatus according to claim 1 characterised in that the joint head (36) sits with a spherical mounting surface (42) in a mounting surface (44), of corresponding spherical shell configuration, of the joint receiving means (38).

3. A closing apparatus according to claim 2 characterised in that on its side which is remote from the mounting surface (42) in the axial direction the joint head (36) has a step surface (46) which extends transversely and in particular perpendicularly to the axis of movement (20) of the closing cylinder arrangement (8) and which is disposed opposite a step surface (48) of the joint receiving means (38), which extends transversely and in particularly perpendicularly to the axis of movement (22) of the displaceable mould portion carrier (6), with an axial play such that lack of parallelism between the axes of movement (20, 22) of up to an angle of at least ± 5° can be compensated.

4. A closing apparatus according to claim 2 or claim 3 characterised in that the joint receiving means (38) is formed by two plate-like mounting members (50, 51) which bear against each other in parallel relationship and which are connected releasably to each other and to the mould portion carrier (6).

5. A closing apparatus according to one or more of claims 1 to 4 characterised in that the second displaceable mould portion carrier (6) is guided in a substantially tilt-free manner on preferably four guide bars (24) which are parallel to each other and to the axis of movement (22).

6. A closing apparatus according to claim 5 characterised in that the displaceable mould portion carrier (6) comprises two parallel carrier plates (30, 31) which are arranged transversely and in particular perpendicularly to the axis of movement (22) and which are connected together rigidly and in particular non-releasably and which have respective mutually aligned guide openings (32) for the guide bars (24).

7. A closing apparatus according to one or more of claims 2 to 6 characterised in that in its end region remote from the closing piston (12) the piston rod (14) is in the form of an ejector cylinder (54) of a pressure medium-actuable ejector arrangement (60) which extends axially through openings in the joint (18) and the displaceable mould portion carrier (6).

## Revendications

1. Dispositif de fermeture pour un moule d'injection consistant en un premier support d'une partie de moule (4) disposé à poste fixe, en un second support d'une partie de moule (6) guidé de façon à pouvoir coulisser par rapport à celui-ci sur des tiges de guidage (24) ainsi qu'en un dispositif de vérin de fermeture (8) relié aux supports (4, 6) de parties de moule, qui peut être actionné par un fluide sous pression, avec un vérin (10) disposé à poste fixe derrière le second support de partie de moule (6) et en un piston de fermeture (12), qui vient en prise au moyen d'une tige de piston (14) sur le support de partie de moule (6) qui peut coulisser, dispositif de fermeture caractérisé en ce que la tige de piston (14) est reliée au support de partie de moule (6) guidé de façon à pouvoir coulisser au moyen d'un joint articulé à mouvement oscillant (18), qui se compose d'une tête d'articulation (36) disposée sur la tige de piston (14) et d'une cage d'articulation (38) recevant celle-ci.

2. Dispositif de fermeture selon la revendication 1, caractérisé en ce que la tête d'articulation (36) repose par une surface d'appui (42) en forme de calotte sur une surface d'appui correspondante en forme de coquille sphérique (44) de la cage d'articulation (38).

3. Dispositif de fermeture selon la revendication 2, caractérisé en ce que la tête d'articulation (36) présente sur son côté tourné dans le sens axial à l'opposé de la surface d'appui (42), une surface à gradins (46) s'étendant perpendiculairement, en particulier à l'axe du mouvement (20) du dispositif à vérin de fermeture (8), qui se trouve en regard d'une surface à gradins (48) de la cage d'articulation (38) s'étendant en travers, en particulier perpendiculairement à l'axe du mouvement (22) du support de la partie de moule (6) qui peut coulisser avec un jeu axial tel, que l'on peut compenser un défaut de parallélisme entre les axes des mouvements (20, 22) jusqu'à un angle d'au moins ± 5°.

4. Dispositif de fermeture selon la revendication 2 ou 3, caractérisé en ce que la cage d'articulation (38) est formée par deux parties de montage (50, 51) en forme de plaques reliées de façon détachable, l'une à l'autre et au support de partie de moule (6), se tenant côte à côte de façon parallèle.

5. Dispositif de fermeture selon une ou plusieurs des revendications 1 à 4, caractérisé en ce que le deuxième support de partie de moule, qui peut coulisser, (6) est guidé sans basculer de préférence sur quatre tiges de guidage (24) parallèles les unes aux autres et parallèles à l'axe du mouvement (22).

6. Dispositif de fermeture selon la revendication 5, caractérisé en ce que le support de la partie de moule (6), qui peut coulisser, se compose de deux plaques de support (30, 31) disposées en travers, en particulier perpendiculairement à l'axe du mouvement (22) et de façon rigide, en particulier reliées l'une à l'autre de façon non détachable, plaques qui présentent respectivement des ouvertures de guidage en alignement les unes avec les autres pour les tiges de guidage (24).

7. Dispositif de fermeture selon une ou plusieurs des revendications 2 à 6, caractérisé en ce que la tige de piston (14) fait office dans sa zone terminale située à l'opposé du piston de fermeture (12) de vérin d'éjection (54) d'un dispositif d'éjection (60) s'étendant axialement à travers les ouvertures de l'articulation (18) et du support de la partie de moule qui peut coulisser (6), ce dispositif pouvant être actionné par un fluide sous pression.
